# EUROPEAN PATENT SPECIFICATION

(11) **EP 1 922 848 B1**
(45) Date of publication and mention of the grant of the patent: **03.10.2012**
(21) Application number: 06795272.1
(22) Date of filing: 17.08.2006
(51) Int. Cl.: H04L 12/58

(54) **PRIORITY ELEMENTS IN INSTANT MESSAGING CONVERSATIONS**
PRIORITÄTSELEMENTE IN INSTANT-MESSAGING-KONVERSATIONEN
ELEMENTS DE PRIORITE DANS DES CONVERSATIONS DE MESSAGERIE INSTANTANEE

(30) Priority: 06.09.2005 US 220634
(43) Date of publication of application: 21.05.2008
(60) Divisional application: 11154645.3
(73) Proprietor: Nokia Siemens Networks Oy, 02022 Espoo (FI)
(72) Inventor: VESTERINEN, Matti, I., FIN-00250 Helsinki (FI)
(74) Representative: Bruglachner, Thomas E.
(86) International application number: PCT/IB2006/002244
(87) International publication number: WO 2007/029069

(56) References cited:
- WO-A1-2004/056137
- WO-A2-2004/075025
- US-A1- 2004 017 396
- US-A1- 2004 158 610
- US-A1- 2005 138 128
- US-B1- 6 563 788
- SPARKS R.: 'SIP Call Control: Transfer' INTERNET ENGINEERING TASK FORCE, INTERNET DRAFT, [Online] March 2000, XP015035592 Retrieved from the Internet: <URL:http://www.tools.ietf.org/html/draft-s parks-sip-cc-transfer-00>

## Description

### FIELD OF THE INVENTION

Embodiments of this invention relate to text messaging, and more particularly to the use of multiple devices to conduct an Instant Messaging (IM) conversation.

### BACKGROUND OF THE INVENTION

Instant Messaging (IM) is the exchange of messages in realtime between two or more people. Unlike a dial-up system, such as the telephone, IM requires that both parties be logged onto their respective IM services at the same time. Also known as "chatting," IM has become very popular for both business and personal use. Popular IM services on the public Internet include MSN Messenger, AOL Instant Messenger, Yahoo! Messenger, .NET Messenger Service and ICQ. Examples of IM standards include XMPP (Extensible Messaging and Presence Protocol) and SIP/SIMPLE (SIP (Session Initiation Protocol) for Instant Messaging and Presence Leveraging Extensions).

Currently, however, IM conversations are somewhat limited because they must generally be finished on the same devices and by the same persons as they began. Unlike with a dial-up system, it is not possible for one party of an IM conversation, the transferor, to transfer the IM conversation to another party, the transferee, wherein the transferee is able to pick up where the transferor left off. A need, therefore, exists for an improved means of conducting an IM conversation, wherein a first party is able to transfer an IM conversation to a second party without having to interrupt or stop and restart the 1M conversation.

IM conversations are further limited by the fact that parties to a conversation are generally not free to move around from one device to another (e.g., from a user's personal computer (PC) to his or her personal digital assistant (PDA) or cellular telephone). In particular, it is currently not possible for a person to begin multiple text messaging conversations on one device, and then selectively transfer only some of those conversations to another device. For example, the user may want to leave his or her office where he or she was conducting IM conversations with a friend and with the user's boss, and continue only the IM conversation with his or her boss on, for example, a PDA or cell phone. A further need, therefore, exists for means by which a user conducting several IM conversations can selectively transfer one or more of those conversations to another device operated by that user.

US 2004/0158610 describes systems for saving and retrieving forwarded instant messages comprising a primary instant message processing device configured to forward incoming instant messages to an available secondary instant message processing device and a storage device accessible to the primary instant message storage device. The storage device is configured to capture each instant message sent and received. The primary instant message processing device is further configured to retrieve the captured instant messages and to display a transcript of instant messages sent and received on a display device coupled to the primary instant message processing device upon deforwarding of instant messages.

### BRIEF SUMMARY OF THE INVENTION

Generally described, various exemplary embodiments of the present invention provide an improvement over the known prior art by providing an improved means by which a first party can transfer a text messaging conversation from his or her device (i.e., the first device) to a second party's device (i.e., the subsequent device). In particular, exemplary embodiments of the present invention allow the second party to first view, on the subsequent device, text messages the first party previously sent and/or received as part of the text messaging conversation using the first device, prior to continuing the conversation using the subsequent device. This facilitates the second party's introduction to the conversation and enables the second party to pick up where the first party left off without interruption. In one exemplary embodiment, the conversation may be transferred by sending a signal to an IM server instructing the server to transfer the conversation to the second party. In another exemplary embodiment, the conversation may be transferred based on a change in the relationship between a priority level associated with the first party's device and that of the second party's device.

Exemplary embodiments of the present invention further provide an improvement over the known prior art by providing a means by which a user can selectively transfer only certain text messaging conversations he or she was previously conducting on a first device to his or her second device. In one exemplary embodiment, this is done by associating a priority level with each buddy or buddy group the user anticipates conducting a text messaging conversation with for each of the user's devices. By changing the priority level associated with a particular buddy or buddy group for a particular device, the user can selectively transfer only certain conversations from the first device to the second device. In exemplary embodiments, the transfer of the conversation involves displaying on the second device the text messaging conversations previously conducted on the first device prior to commencing with the conversation using the second device, thus allowing the user to pick up right where he or she left off on the first device.

According to one aspect of the present invention, there is provided a method of selectively transferring a text messaging conversation to a second device, which was previously conducted using a first device, said method comprising: causing the text messaging conversation to be conducted using the first device; modifying a relationship between a priority level associated with the first device and a priority level associated with the second device based at least in part on with whom the text messaging conversation is conducted; and automatically causing the text messaging conversation to be continued using the second device if the priority level associated with the second device exceeds the priority level associated with the first device, wherein causing the text messaging conversation to be continued comprises causing one or more text messages of the text messaging conversation conducted using the first device to be displayed on the second device.

According to another aspect of the present invention, a computer program product for continuing a text messaging conversation on a second device, which was previously conducted using a first device, is provided. In one exemplary embodiment, the computer program product includes at least one computer-readable storage medium having computer-readable program code portions stored therein. These computer-readable program code portions may include: (1) a first executable portion for causing the text messaging conversation to be conducted using the first device; and (2) a second executable portion for automatically causing the text messaging conversation to be continued using the second device if a priority level associated with the second device exceeds a priority level associated with the first device. In one exemplary embodiment, causing the text messaging conversation to be continued comprises causing one or more text messages of the text messaging conversation conducted using the first device to be displayed on the second device.

According to one aspect of the present invention a digital device capable of transferring a text messaging conversation conducted on the digital device to a different device, is provided. In one exemplary embodiment the digital device includes a processor and a memory in communication with the processor that stores an application executable by the processor, wherein the application is capable, upon execution, of causing a relationship between a priority level associated with the digital device and a priority level associated with the different device to be modified. Modification of the relationship results in one or more text messages of the text messaging conversation conducted using the digital device being transferred and displayed on the different device.

According to yet another aspect of the present invention a network entity capable of transferring a text messaging conversation from a first device to a second device is provided. In one exemplary embodiment, the network entity comprises means for storing one or more text messages of the text messaging conversation conducted using the first device, and means for transmitting the stored text messages to the second device upon a determination that a priority level associated with the second device exceeds a priority level associated with the first device.

According to another aspect of the present invention a system for continuing a text messaging conversation on a second device, which was previously conducted using a first device, is provided. In one exemplary embodiment the system includes a first device; a network entity in communication with the first device that stores one or more text messages of the text messaging conversation conducted using the first device; and a second device in communication with the network entity, wherein the second device receives and displays one or more stored text messages when a priority level associated with the second device exceeds a priority level associated with the first device.

### BRIEF DESCRIPTION OF THE DRAWING

Having thus described the invention in general terms, reference will now be made to the accompanying drawings, which are not necessarily drawn to scale, and wherein:
Figure 1 is a block diagram of a system that would benefit from exemplary embodiments of the present invention;
Figure 2 is a block diagram of another system that would benefit from exemplary embodiments of the present invention;
Figure 3 is a block diagram of yet another system that would benefit from exemplary embodiments of the present invention;
Figure 4 is a schematic block diagram of an entity capable of functioning as a digital device, IM server, or other network entity in accordance with exemplary embodiments of the present invention;
Figure 5 is a schematic block diagram of a mobile station capable of operating in accordance with an exemplary embodiment of the present invention;
Figures 6 is a flow chart illustrating the steps which could be taken when transferring a text messaging conversation from parties of one work phase to the parties of another work phase in accordance with an exemplary embodiment of the present invention;
Figure 7 is a flow chart illustrating the steps which could be taken when transferring a text messaging conversation from an operator to one of a plurality of emergency service personnel in accordance with an exemplary embodiment of the present invention;
Figure 8 is a flow chart illustrating the steps which could be taken when transferring a text messaging conversation from one party to another party in accordance with an exemplary embodiment of the present invention; and
Figure 9 is a flow chart illustrating the steps which could be taken when selectively transferring one or more text messaging conversations from a first device to a second device according to an exemplary embodiment of the present invention.

### DESCRIPTION OF THE INVENTION

The present inventions now will be described more fully hereinafter with reference to the accompanying drawings, in which some, but not all embodiments of the inventions are shown. Indeed, these inventions may be embodied in many different forms and should not be construed as limited to the embodiments set forth herein; rather, these embodiments are provided so that this disclosure will satisfy applicable legal requirements. Like numbers refer to like elements throughout.

### Overview:

Exemplary embodiments of the present invention provide an improved means of conducting a text messaging conversation by providing a means by which a first party can transfer a text messaging conversation to a second party. In particular, according to exemplary embodiments of the present invention, once the text messaging conversation has been transferred to the second party, the second party is able to first view on his or her device the text messages previously sent and/or received by the first party as part of the text messaging conversation. This enables the second party to easily pick up where the first party left off.

Exemplary embodiments of the present invention could, therefore, be used in conjunction with the completion of a new project involving various parties working on several different phases of the project, wherein it would be useful for parties of subsequent phases to be generally aware of important discoveries or accomplishments of the parties to the preceding phases. For example, consider a scenario in which a company is beginning the process of developing a new product. The process would presumably involve several phases (e.g., the research and development (R&D) phase, the testing phase, and the marketing phase). Each phase would involve one or more employees working together to complete a given task prior to transferring the project onto the next phase. It would be helpful for individuals in subsequent phases to be aware of what was communicated between the parties in the preceding phases. For example, an employee performing the testing of the product (i.e., parties in the testing phase) would likely benefit from knowing details of the various components of the new product selected and researched by employees performing the R&D (i.e., parties in the R&D phase).

According to exemplary embodiments of the present invention, a text messaging conversation may be established at the beginning of each new project. In addition, a priority table may be created that defines each phase of the project and associates a priority level with that phase. In particular, the devices operated by the one or more parties to each phase would be assigned a priority level based on the phase in which they are included. When the project is started (i.e., a text messaging conversation begins between the parties of the first phase of the project), the priority level associated with the devices of the first phase may be high, while the priority levels associated with the devices of the subsequent phases may be low. Alternatively, several different priority levels (e.g., 0 - 10) may be assigned, for example in descending order, to the various work phases. Once the first phase of the project is completed (e.g., the employees have completed the R&D portion of the product development process), the priority level associated with the devices of the first phase, the subsequent phase, or both may be changed in order to affect a transfer of the text messaging conversation to the parties of the next phase without interruption. For example, the priority level of the devices in the first phase may be changed to low, and the priority level of the devices of the next phase may be changed to high. This process continues until the project (i.e., the text messaging conversation) is completed.

In exemplary embodiments, each time the relationship between the priority levels of the device of the current phase and the priority levels of the devices of a subsequent phase is modified (e.g., by changing the priority levels of the device in the current phase, the devices in the subsequent phase, or both), all of the text messages previously sent and/or received by the devices of the current, and all preceding phases, are displayed on the devices of the subsequent phase. This enables the employees in the subsequent phases to get up to speed on what was done and recorded by the parties of each preceding phase.

Exemplary embodiments of the present invention could also be used in conjunction with incoming calls to an emergency or help services center. For example, consider a scenario where a person dials 911 to report a fire, or some other event that would cause the person to need emergency assistance. According to exemplary embodiments of the present invention, the operator, or front-end person who receives the call, may maintain a list of parties to whom the call may be transferred. These parties may include, for example, the police, the fire department, animal control, and/or poison control. Each party, including the operator, may have a priority level associated with it. Initially, for example, the priority level associated with the operator may be high, while the priority levels associated with the other parties may be low.

When the operator first receives the call from the person in need of assistance, the conversation between the operator and the caller is recorded. The operator can then establish a connection to an IM server (alternatively, the connection may have already been established) for the purpose of converting the recorded conversation into instant messages. In other words, an IM conversation may be created for each incoming call using, for example, speech-to-text conversion. Once the operator determines where the call should be forwarded or transferred (e.g., the fire department in the instance of a fire) he or she may cause the relationship between the priority level associated with the operator and that of the selected recipient to be changed, by, for example, causing the priority level associated with the selected recipient to change to high, while causing the priority level associated with the operator him/herself to change to low. As will be appreciated by one of ordinary skill in the art, this is just one exemplary method of modifying the relationship between the various priority levels, and exemplary embodiments of the present invention are not limited to any one such method. According to exemplary embodiments, the change in the priority levels not only causes the call to be transferred, but also causes the text messages reflecting the conversation between the caller and the operator to be transmitted to the party to whom the call is transferred. This is beneficial at least because it eliminates the need for the caller to re-communicate to the transferee all of the details of the emergency that he or she already communicated to the operator, thus cutting down on the time needed for the emergency personnel to determine what action may need to be taken.

As one of ordinary skill in the art will recognize, the above exemplary embodiment would also be beneficial in a scenario where a customer calls a help center, for example, to see assistance with his or her computer. By implementing exemplary embodiments of the invention, the customer would be able to provide sufficient details of the problems he or she is having to enable the operator, or customer service representative, to determine to which division of the company (e.g., hardware, software, etc.) to transfer the call. Once the call is transferred to that division, the caller would not be forced to again provide those details, since they would be provided to the recipient in the form of converted text messages.

According to another exemplary embodiment of the present invention, a first party is able to manually transfer a text messaging conversation he or she is conducting to a second party. In one exemplary embodiment, the first party may do so by generating and transmitting a signal to, for example, an IM server indicating the first party's desire to transfer the call to the second party. The signal may include the User ID of the second party, or some other unique identifier that would enable the IM server to determine to whom the text messaging conversation should be transferred. In one exemplary embodiment, as a result of receiving the signal, the IM server would first transfer all of the text messages previously sent and/or received by the first party as part of the text messaging conversation, which the IM server may have stored on the IM server itself or in a database accessible by the IM server, to the second party's device. The IM server would then transmit all subsequent text messages of the text messaging conversation to the second party's device.

According to yet another exemplary embodiment to selectively of the present invention, a user is able continue only certain text messaging conversations on a subsequent device that he or she was previously conducting on a preceding device. In general, this is done by associating priority levels with specific parties with whom the user may be conducting a text messaging conversation for each of the user's various devices, rather than more generally with the user's devices themselves.

For example, in one exemplary embodiment a user may generate a list of buddies (e.g., Mom, Dad, Joe, Beth, etc.) or, alternatively, a list of buddy groups (e.g., Friends, Family, Colleagues, etc.) with whom the user anticipates conducting an IM conversation. The user may then assign a priority level to each buddy or buddy group for each of the user's various devices. For instance, the user may specify that Friends, Family and Colleagues each have a high priority on the user's personal computer (PC) and a low priority on the user's personal digital assistant (PDA) and cell phone. In one exemplary embodiment this would mean that the user would receive text messages from his Family, Friends and Colleagues only on his or her PC and not on the user's PDA or cell phone.

Assume then that the user begins text messaging conversations with his or her Mom (i.e., Family), Joe (i.e., Friend), and his or her boss, Mr. Smith (i.e., Colleague) while he or she is in his or her office working on his or her PC. Then assume the user needs to leave his or her office and wishes to continue only the conversation with Mr. Smith on his or her PDA. According to exemplary embodiments, in order to do so, the user may cause the priority level associated with Colleagues on the PDA to change to high, and the priority level associated with Colleagues on the PC to change to low, while leaving the other priority levels the same. As a result, all of the text messages previously sent and/or received by the user as part of the text messaging conversation with Mr. Smith on the user's PC will be displayed on the user's PDA. In addition, all subsequent text messages received by the user from Mr. Smith will be sent to the PDA. Any text messages received from either Mom or Joe will be sent only to the user's PC.

In general, the preceding exemplary embodiments of the present invention rely on a change in the relationship between a priority level associated with a first device and a priority level associated with a second device. These devices may be operated by the same or by a different user. As one of ordinary skill will recognize, changing the relationship between the respective priority levels may involve changing the priority level associated with the first device, the second device or both devices. The discussion herein of exemplary embodiments should, therefore, not be taken as limiting the invention to any one method of modifying this relationship. In addition, the priority levels of the various devices may be defined and changed by the user's device itself, by an IM server, or by some other network entity responsible for monitoring the text messaging conversations.

### System and Terminal Architecture:

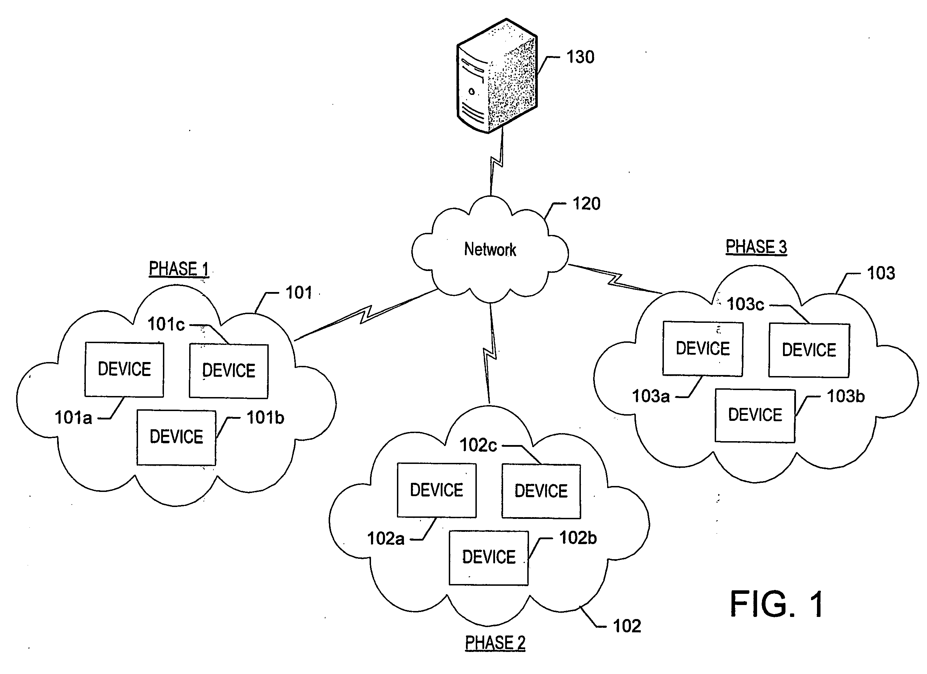

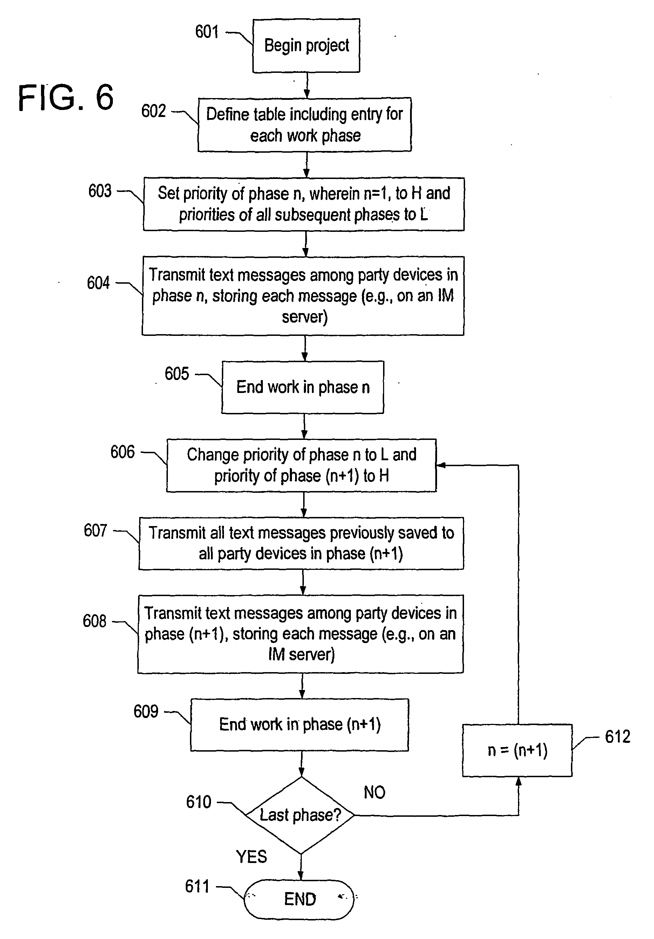

Reference is now made to FIG. 1, in which one type of system that would benefit from an exemplary embodiment of the present invention is illustrated. In particular, FIG. 1 illustrates the scenario discussed above wherein a text messaging conversation is continued throughout the duration of a project and is transferred from parties of one work phase to the parties of a subsequent work phase. This scenario is discussed again in detail below with reference to FIG. 6.

As shown in FIG. 1, the system may include one or more devices **101a-c** of a first phase (PHASE 1) **101** connected to an Instant Messaging (IM) server **130** via a data network **120**, such as a local area network (LAN), metropolitan area network (MAN), and/or wireless area network (WAN), for the purpose of sending and receiving instant messages between devices **101a-c** of the first phase **101**, as well as with other devices similarly connected to the data network **120.** The devices **101a-c** may include, for example, a cellular telephone, personal digital assistant (PDA), pager, personal computer (PC), laptop, tablet, or any other communication device capable of sending and/or receiving data. The system may further include one or more additional devices **102a-c** of a second phase (PHASE 2) **102**, and one or more devices **103a-c** of a third phase (PHASE 3) **103**, similarly connected to the IM server **130** via the data network **120** for the purpose of sending and receiving text messages. In one exemplary embodiment, the system may further include a database, not shown, that is accessible at least to the IM server **130** for storing the text messages of the text messaging conversation. The database may further store a table defining the various priority levels assigned to the different devices of each phase.

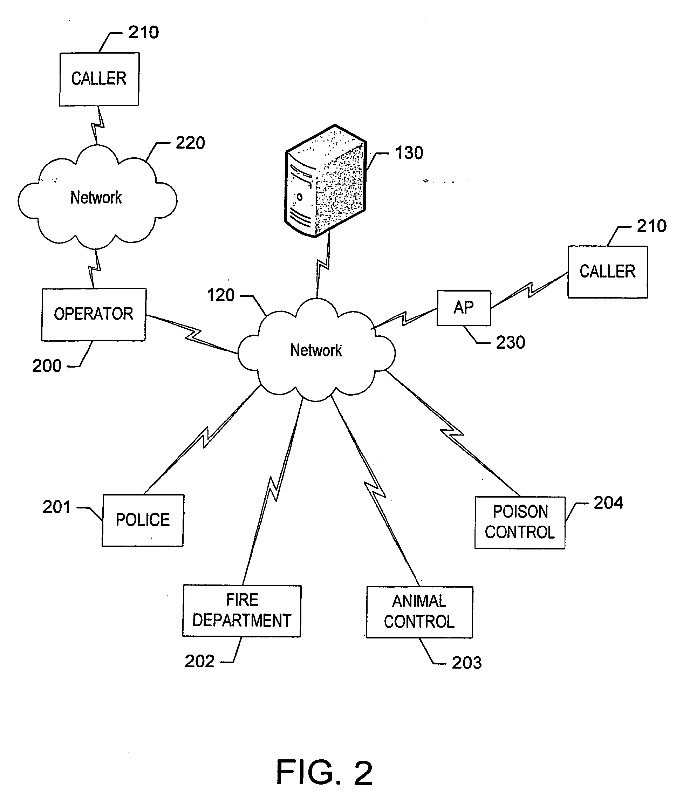

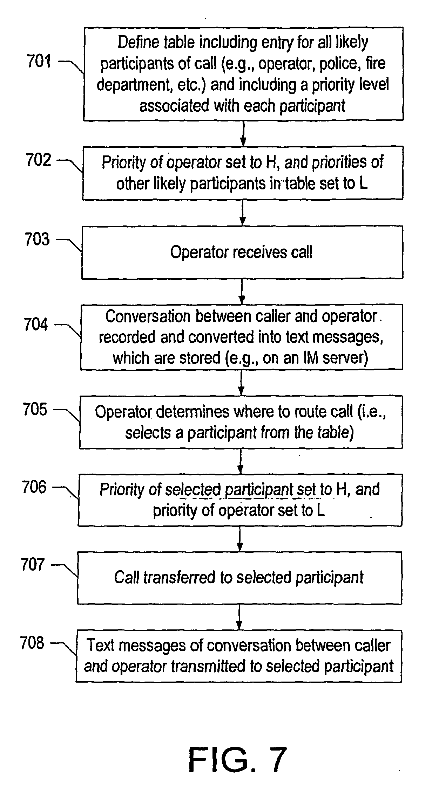

Referring to FIG. 2, an illustration of another type of system that would benefit from the present invention is provided. In particular, FIG. 2 illustrates the scenario discussed above wherein a person calls an emergency response operator in order to seek emergency assistance, and text messages representing the conversation between the caller and the operator are transmitted to the ultimate recipient of the call (e.g., the fire department). This scenario is discussed again below in detail with reference to FIG. 7.

As shown in FIG. 2, the system may include an operator, and more specifically a device operated by the operator, **200** in communication with a caller **210** (i.e., a device operated by the caller) via an access network **220**, such as, for example, a Public Switched Telephone Network (PSTN), for the purpose of receiving an emergency call. As shown, the caller **210** may also be in communication with the operator **200** via the data network **120** by means of an Access Point **230**. The operator, in turn is connected to the IM server **130** via the data network **120** for the purpose of converting a recording of the call between the caller **210** and the operator **200** into text messages, which can be stored, for example, on the IM server **130** itself or in a database, not shown, accessible by the IM server **130.**

The system may further include devices operated by members of the police **201**, the fire department **202**, animal control **203**, and/or poison control **204** connected to the operator **200** and to the IM server **130** via the data network **120** for the purpose of receiving the transferred call and the converted text messages in the instance where the call is transferred to that department or device. These devices would likely be operated by department-specific operators - i.e., individuals at each of the departments that are responsible for receiving emergency calls transferred or forwarded from the operator and dispatching orders to the appropriate individuals within the department who will be taking the necessary action.

As stated above, although not shown, these devices may similarly be operated by members of various departments of a help services center, such as, for example, a computer help services center.

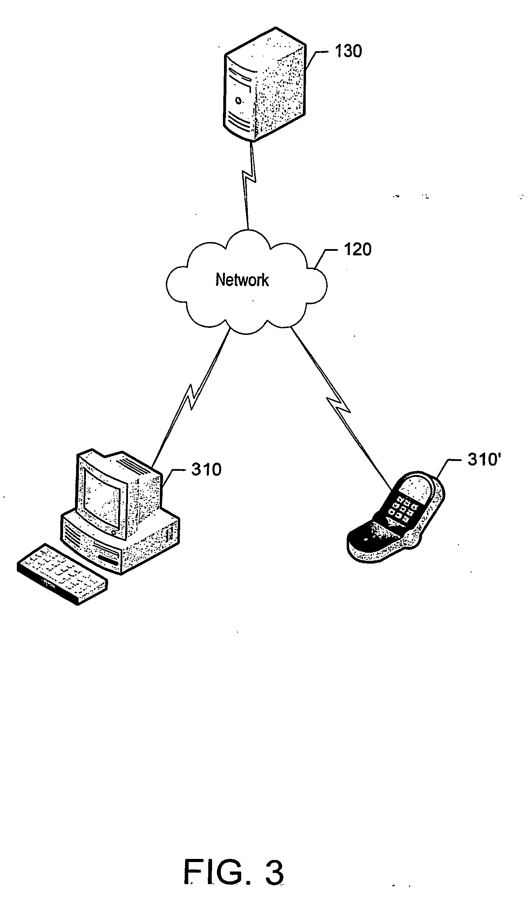

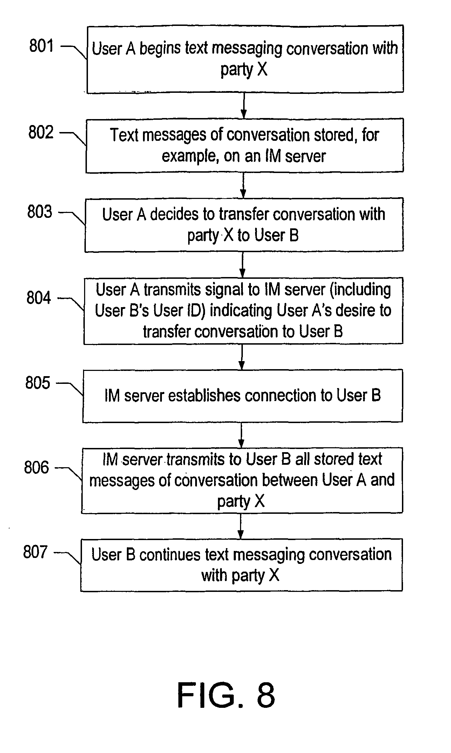

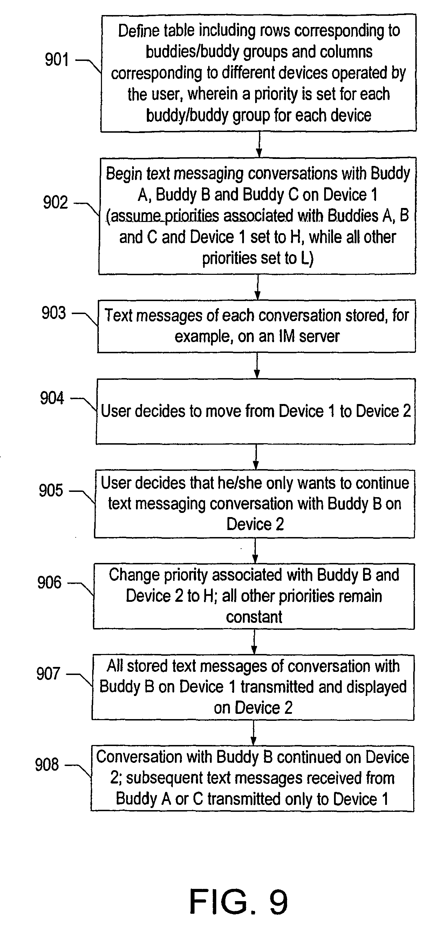

Reference is now made to FIG. 3, which illustrates yet another type of system that would benefit from exemplary embodiments of the present invention. In particular, FIG. 3 illustrates both the scenario in which a first party transfers a text messaging conversation to a second party and the scenario in which a user selectively transfers only certain text messaging conversations to a second device. These scenarios are discussed in more detail below in reference to FIG. 8 and FIG. 9, respectively.

As shown in FIG. 3, the system may include any two or more digital devices **310**, **310'**, such as cellular telephones, PDAs, pagers, PCs, laptops or tablets, connected to the IM server **130** via the data network **120** for the purpose of sending and receiving instant messages to or from various other digital devices that are operated by other parties and are similarly connected to the data network **120**. In one exemplary embodiment the digital devices **310, 310'** are each operated by a different user, and the user of the first device **310** wishes to transfer a text messaging conversation he or she is conducting to the user of the second device **310'**. In another exemplary embodiment, the digital devices **310, 310'** are each operated by the same user, and the user wishes to transfer only specific text messaging conversations he or she is currently conducting on the first device **310** to the second device **310'**. In either exemplary embodiment, the system may further include a database, not shown, that is accessible to the IM server **130** and in which text messages of the various text messaging conversations conducted on the digital devices **310, 310'** may be stored.

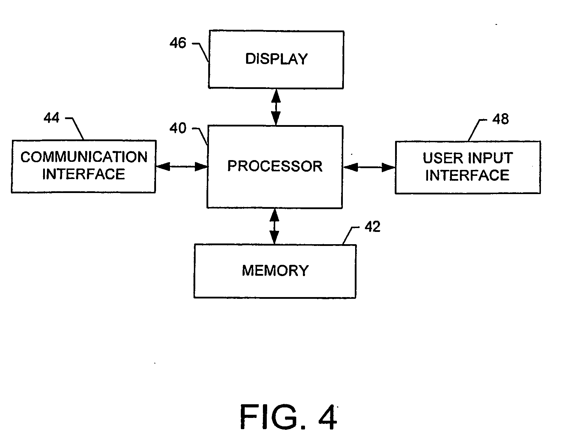

Referring now to Figure 4, a block diagram of an entity capable of operating as a digital device of any of the preceding systems (e.g., **101a-c, 102a-c, 103a-c, 200, 201-204, 310** or **310'**) and/or IM Server **130** is shown in accordance with one embodiment of the present invention. The entity capable of operating as a digital device or IM Server includes various means for performing one or more functions in accordance with exemplary embodiments of the present invention, including those more particularly shown and described herein. It should be understood, however, that one or more of the entities may include alternative means for performing one or more like functions As shown, the entity capable of operating as a digital device (e.g., **101a-c, 102a-c, 103a-c, 200, 201-204, 310** or **310'**) and/or IM Server **130** can generally include means, such as a processor **40** connected to a memory **42**, for performing or controlling the various functions of the entity. The memory can comprise volatile and/or non-volatile memory, and typically stores content, data or the like. For example, the memory typically stores content transmitted from, and/or received by, the entity. Also for example, the memory typically stores software applications, instructions or the like for the processor to perform steps associated with operation of the entity in accordance with embodiments of the present invention.

In addition to the memory **42,** the processor **40** can also be connected to at least one interface or other means for displaying, transmitting and/or receiving data, content or the like. In this regard, the interface(s) can include at least one communication interface **44** or other means for transmitting and/or receiving data, content or the like, as well as at least one user interface that can include a display **46** and/or a user input interface **48.** The user input interface, in turn, can comprise any of a number of devices allowing the entity to receive data from a user, such as a keypad, a touch display, a joystick or other input device.

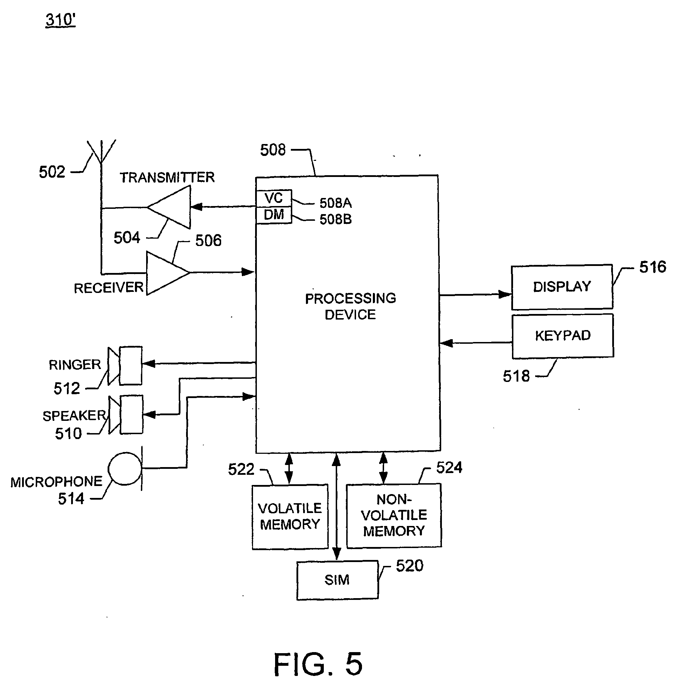

Reference is now made to FIG. 5, which illustrates one type of digital device (e.g., **101a-c, 102a-c, 103a-c, 200, 201-204, 310** or **310'**), namely a mobile terminal or mobile station, that could be used to send and receive instant messages and that would, therefore, benefit from exemplary embodiments of the present invention. The mobile terminal, or other digital device, includes various means for performing one or more functions in accordance with exemplary embodiments of the present invention, including those more particularly shown and described herein. It should be understood, however, that one or more of the entities may include alternative means for performing one or more like functions. More particularly, for example, as shown in FIG. 5, the entity can include an antenna **502**, a transmitter **504**, a receiver **506**, and means, such as a processing device **508**, e.g., a processor, controller or the like, that provides signals to and receives signals from the transmitter **5**04 and receiver **506**, respectively. These signals include signaling information in accordance with the air interface standard of the applicable cellular system and also user speech and/or user generated data. In this regard, the mobile station can be capable of operating with one or more air interface standards, communication protocols, modulation types, and access types. More particularly, the mobile station can be capable of operating in accordance with any of a number of second-generation (2G), 2.5G and/or third-generation (3G) communication protocols or the like. Further, for example, the mobile station can be capable of operating in accordance with any of a number of different wireless networking techniques, including Bluetooth, IEEE 802.11 WLAN (or Wi-Fi®), IEEE 802.16 WiMAX, ultra wideband (UWB), and the like.

It is understood that the processing device **508**, such as a processor, controller or other computing device, includes the circuitry required for implementing the video, audio, and logic functions of the mobile station and is capable of executing application programs for implementing the functionality discussed below. For example, the processing device may be comprised of various means including a digital signal processor device, a microprocessor device, and various analog to digital converters, digital to analog converters, and other support circuits. The control and signal processing functions of the mobile device are allocated between these devices according to their respective capabilities. The processing device **508** thus also includes the functionality to convolutionally encode and interleave message and data prior to modulation and transmission. The processing device can additionally include an internal voice coder (VC) **508A,** and may include an internal data modem (DM) **508B.** Further, the processing device **508** may include the functionality to operate one or more software applications, which may be stored in memory. For example, the controller may be capable of operating a connectivity program, such as a conventional Web browser. The connectivity program may then allow the mobile station to transmit and receive Web content, such as according to HTTP and/or the Wireless Application Protocol (WAP), for example.

The mobile station may also comprise means such as a user interface including, for example, a conventional earphone or speaker **510**, a ringer **512**, a microphone **514**, a display **516**, all of which are coupled to the controller **508**. The user input interface, which allows the mobile device to receive data, can comprise any of a number of devices allowing the mobile device to receive data, such as a keypad **518**, a touch display (not shown), a microphone **514**, or other input device. In embodiments including a keypad, the keypad can include the conventional numeric (0-9) and related keys (#, *), and other keys used for operating the mobile station and may include a full set of alphanumeric keys or set of keys that may be activated to provide a full set of alphanumeric keys. Although not shown, the mobile station may include a battery, such as a vibrating battery pack, for powering the various circuits that are required to operate the mobile station, as well as optionally providing mechanical vibration as a detectable output.

The mobile station can also include means, such as memory including, for example, a subscriber identity module (SIM) **520**, a removable user identity module (R-UIM) (not shown), or the like, which typically stores information elements related to a mobile subscriber. In addition to the SIM, the mobile device can include other memory. In this regard, the mobile station can include volatile memory **522**, as well as other non-volatile memory **524**, which can be embedded and/or may be removable. For example, the other non-volatile memory may be embedded or removable multimedia memory cards (MMCs), Memory Sticks as manufactured by Sony Corporation, EEPROM, flash memory, hard disk, or the like. The memory can store any of a number of pieces or amount of information and data used by the mobile device to implement the functions of the mobile station. For example, the memory can store an identifier, such as an international mobile equipment identification (IMEI) code, international mobile subscriber identification (IMSI) code, mobile device integrated services digital network (MSISDN) code, or the like, capable of uniquely identifying the mobile device. The memory can also store content. The memory may, for example, store computer program code for an application and other computer programs. For example, in one embodiment of the present invention, the memory may store computer program code for enabling the mobile station to cause a relationship between a priority level associated with the mobile station and a priority level associated with a subsequent mobile station, or other digital device, to be modified, wherein the modification of the relationship causes a text messaging conversation previously conducted using the mobile station to be transferred to the subsequent mobile station or digital device. In one exemplary embodiment this involves transferring to and displaying on the subsequent mobile station or digital device one or more text messages of the text messaging conversation conducted using the mobile station.

The system, method, device, network entity and computer program product of exemplary embodiments of the present invention are primarily described in conjunction with mobile communications applications. It should be understood, however, that the system, method, device, network entity and computer program product of embodiments of the present invention can be utilized in conjunction with a variety of other applications, both in the mobile communications industries and outside of the mobile communications industries. For example, the system, method, device, network entity and computer program product of embodiments of the present invention can be utilized in conjunction with wireline and/or wireless network (e.g., Internet) applications including, for example, in embodiments in which an ongoing conversation is transferred to a fixed, wireline device.

Also, it should be understood that while the terminal was illustrated and described as comprising a mobile telephone, mobile telephones are merely illustrative of one type of terminal that would benefit from the present invention and, therefore, should not be taken to limit the scope of the present invention. While several embodiments of the terminal are illustrated and described for purposes of example, other types of terminals, such as personal digital assistants (PDAs), pagers, personal computers (PCs), laptop computers, tablets, and other types of electronic systems including both mobile, wireless devices and fixed, wireline devices, can readily employ embodiments of the present invention.

### Methods of Transferring an IM Conversation to a Different Party:

### Work Phases:

As discussed above, exemplary embodiments of the present invention may be used in conjunction with a project involving multiple work phases, wherein text messages that were sent and received between parties of one phase are transferred to the parties of subsequent phases upon completion of each phase. Reference is now made to FIG. 6, which illustrates the steps which could be taken in order to transfer the text messaging conversation from each phase to the next in accordance with this exemplary embodiment.

As shown, the process begins when a new project is started (Step 601) and a table is defined including an entry for each work phase of the new project (Step 602). The table may further include the parties, and in particular the User IDs associated with the parties' devices, that are participating in each phase. In Step 603 a priority level for each phase is set. In particular, the priority level of the n^{th} phase, wherein n=1, is set to High, while the priority levels associated with all subsequent phases are set to Low. Table 1 provides an example of a table that could be created in Steps 602 and 603.

**Table 1: Priorities for Work Phases:**

| **Phase** | **Participants' User ID** | **Priority** |
|---|---|---|
| Phase 1: R&D | Joe | HIGH |
| | Bob | |
| | Sue | |
| Phase 2: Testing | Kelly | LOW |
| | Mark | |
| | Jack | |
| Phase 3: Marketing | Dave | LOW |
| | Carol | |
| | Betty | |

As will be understood by those of ordinary skill in the art, the table may be defined by any of the devices illustrated in FIG. 1 as participating in the various work phases (e.g., **101a-c, 102a-c, 103a-c**). Alternatively, the table may be defined by the IM server **130,** or by an Administrator, not shown. In addition, the table may be stored in a database that is accessible at least to the IM server **130** and perhaps also to the various other devices participating in the text messaging conversation **101a-c, 102a-c, 103a-c.** Alternatively, the table may be stored on the IM server **130** itself.

Following Steps 601-603 the project, and therefore the text messaging conversation between the parties working on the project, is ready to begin. In Step 604 text messages are transmitted and received between the devices of the parties in the first phase (e.g., between Joe, Bob and Sue). The text messages may include, for example, information gathered during completion of various R&D tasks. As the text messages are sent and received, the messages are also stored, for example on the IM server **130**, or alternatively in the database. When the work in this phase is completed (e.g., when the entire R&D for the new product has been completed) (Step 605), the priority level of the n^{th} phase (in this case the 1^{st} phase) is changed to Low, and the priority level of the next (i.e., the (n^{th} + 1), or the 2^{nd}) phase is changed to High (Step 606).

The project has now moved onto the next (in this case the 2^{nd}) phase of development (e.g., the testing phase), and the text messaging conversation will be continued by the parties to this new phase (e.g., Kelly, Mark and Jack). Prior to this, however, in Step 607 all of the text messages previously saved (i.e., all of the text messages sent and received between the parties of the 1^{st} phase) are transmitted to and displayed on the devices of the parties to the 2^{nd} phase. This enables the parties to the 2^{nd} phase to view all of the important developments made and recorded by the parties to the preceding phase.

In Step 608, text messages are then transmitted among the parties in the (n^{th}+ 1) phase (e.g., the 2^{nd}, or testing, phase). When the work is completed in this phase (Step 609), it is determined whether this was the last phase of the project (Step 610). If it is, the process ends, since the project is presumably completed (Step 611). If it is not the last phase, n is increased to (n+1) (e.g., n now equals 2), and the process repeats Steps 606-610 for the next phase of the project. In other words, to continue with the example, the priority of the n^{th} (i.e., the 2^{nd}, or testing) phase is changed to Low, and the priority of the (n^{th} + 1) (i.e., the 3^{rd}, or marketing) phase is changed to High. As a result, all of the text messages previously saved, for example to the IM server (i.e., all text messages sent and received as part of the 1^{st} phase, and all of the text messages sent and received as part of the 2^{nd} phase) are transmitted to and displayed on the devices of the 3^{rd} phase (e.g., on devices operated by Dave, Carol and Betty). One or more text messages are thereafter transmitted among the parties of the 3^{rd} phase and simultaneously stored, for example on the IM server or on a database accessible by the IM server. Once the work in this phase is completed, the process will end since, in this example, it was the last phase of the project.

### Emergency or Help Services Call:

As discussed above, exemplary embodiments of the present invention may further be used in conjunction with emergency or help services calls, wherein one or more text messages representing a conversation between a caller and an operator, or front-end party, are transmitted to the ultimate recipient of the call, eliminating the need for the caller to repeat what he or she has already told to the operator. FIG. 7 illustrates the steps which may be taken when transferring the call, and the corresponding text messages, from the operator to the ultimate recipient in accordance with exemplary embodiments.

As shown, the process begins before the operator receives a call from a person in need, for example, of emergency assistance. In Steps 701 a table is first defined including an entry for all likely participants of an incoming call, including the operator, and including a priority level associated with each of the parties. In Step 702 the priority level associated with the operator is set to High, while the priority levels associated with each of the likely participants is set to Low. In general, this means that all incoming calls will be routed to the operator. As in the above exemplary embodiment, the table may be defined by the operator **200**, by the IM server **130**, or by some other entity, such as an Administrator, not shown. The table may further be stored in a database that is accessible at least to the IM server **130** or in the IM server **130** itself. Tables 2 and 3 below provide examples of such a table for emergency and help services calls, respectively.

**Table 2: Priorities for Potential Transferees of Emergency Services Call:**

| **Department/Participant** | **Priority** |
|---|---|
| Operator | High |
| Police | Low |
| Fire Department | Low |
| Animal Control | Low |
| Poison Control | Low |

**Table 3: Priorities for Potential Transferees of Help Services Call:**

| **Department/Participant** | **Priority** |
|---|---|
| Operator | High |
| Sales | Low |
| Hardware | Low |
| Software | Low |

Once the table is defined and the priority levels set, the operator receives a call (Step 703). In Step 704 the conversation between the caller and the operator is recorded and converted into text messages, which are then stored, for example on the IM server **130**, or alternatively in the database. Once the operator determines where to route the call (e.g., where the emergency is a fire, the operator will likely decide to transfer the call to the fire department) (Step 705), the operator causes the priority level of the selected transferee to be changed to High, and the priority level of the operator to be changed to Low (Step 706). As a result, in Steps 707 and 708, respectively, the call is transferred to the selected participant (e.g., the fire department) and the text messages representing the conversation between the caller and the operator are transmitted to the selected participant.

### Manually Transferring Call to Specific Party:

As discussed above, exemplary embodiments of the present invention may further be used to manually transfer a text messaging conversation from one party to another. FIG. 8 illustrates the steps which may be taken in accordance with this exemplary embodiment. As shown, the process begins where a user (e.g., User A) begins a text messaging conversation with party X (Step 801). As User A is transmitting and receiving text messages as part of the text messaging conversation, these text messages are stored, for example on the IM server or on a database accessible by the IM server (Step 802). At some point in the conversation, User A decides to transfer the text messaging conversation with party X to User B (Step 803). To accomplish this, in Step 804 User A transmits a signal to the IM server indicating User A's desire to transfer the conversation to User B. In one exemplary embodiment, the signal will include a User ID associated with User B, or some other unique identifier which will indicate to the IM server to whom the conversation should be transferred.

In response to receiving the signal, in Steps 805 and 806, respectively, the IM server will establish a connection with a device operated by User B and transmit to that device all of the stored text messages of the text messaging conversation between User A and party X. Finally, in Step 807, User B will continue the text messaging conversation with party X using his or her own device. Exemplary embodiments of the present invention, therefore, facilitate User B's introduction into the text messaging conversation by enabling User B to get up to speed on the messages that were previously transmitted between User A and party X as part of the conversation. User B is, therefore, better able to pick up where User A left off.

### Method of Selectively Continuing an IM Conversation on a Subsequent Device:

A final exemplary embodiment of the present invention provides a means by which a user can selectively transfer only certain text messaging conversations from a first device to a subsequent device. FIG. 9 illustrates the steps which may be taken in order to affect such a transfer in accordance with this exemplary embodiment.

The first step of this process, Step 901, is to define a table including rows corresponding to one or more buddies or buddy groups with whom the user is capable of conducting a text messaging conversation. Exemplary buddy groups may include Friends, Family and/or Colleagues. The table further includes columns corresponding to one or more different devices operated by the user (e.g., personal computer (PC), personal digital assistant (PDA), and/or cellular telephone). A priority level is then set for each buddy/buddy group and for each device. Table 4 below provides an example of such a table that could be defined in Step 901.

**Table 4: Buddy Groups and Their Respective Priority Levels:**

| | **PC** | **PDA** | **Cell Phone** |
|---|---|---|---|
| Friends | High | Low | Low |
| - (Buddy A) | | | |
| Family | High | Low | Low |
| - (Buddy B) | | | |
| Colleagues | High | Low | Low |
| - (Buddy C) | | | |

As in the above exemplary embodiments, the table may be created, for example, by the user through one of his or her devices **310**, **310'**, by the IM server **130**, or by some other entity, such as an Administrator. The table may further be stored on the IM server **130** itself or in a database accessible at least by the IM server.

In Step 902, the user begins text messaging conversations, for example, with Buddy A, Buddy B and Buddy C on Device 1 (e.g., his or her PC). Assume that Buddy A is a member of the user's Friends buddy group, Buddy B is a member of the user's Family buddy group, and Buddy C is a member of the user's Colleagues buddy group. The priority levels associated with Buddies A, B and C are, therefore, High for the user's PC, but Low for the user's PDA and cell phone. As the user is transmitting and receiving text messages as part of each of the above conversations, the text messages are stored, for example on the IM server or in a database accessible by the IM server (Step 903).

In Step 904, the user decides to move from Device 1 (e.g., his or her PC) to Device 2 (e.g., his or her PDA). This may occur, for example, where the user is leaving his or her office to go home, to go to lunch or to run an errand. The user decides, in Step 905, that he or she only wants to continue the text messaging conversation with Buddy B (e.g., his or her family member) on Device 2 (e.g., his or her PDA). He or she does not want to continue the conversations with Buddy A (e.g., his or her friend) or Buddy C (e.g., his or her colleague).

In order to transfer only the text messaging conversation with Buddy B to Device 2, in Step 906, the priority level associated with Buddy B (or in this example, with the Family buddy group) and with Device 2 (e.g., the PDA) will be changed to High. All other priority levels remain constant. In one exemplary embodiment, the priority level associated with Buddy B and Device 1 may further be changed to Low in order to stop text messages sent from Buddy B from being transmitted to the user's Device 1. In the exemplary embodiment where the priority levels associated with both Device 1 and Device 2 for Buddy B are set to High, the text messages sent from Buddy B will simply be transmitted to both devices.

In one exemplary embodiment, in order to affect the above described transfer the user him/herself may manually change the priority levels associated with the various buddies/buddy groups and the various devices by using one of his or her devices to access the table stored either on the IM server or in the database accessible by the IM server and the user device. Alternatively, the user may send a signal to the IM server instructing the IM server to modify the priority levels of the various buddy/buddy groups and devices. In still another exemplary embodiment, the IM server may be pre-programmed to automatically change the priority levels associated with certain buddies or buddy groups and certain devices upon the occurrence of certain enumerated conditions. For instance, the IM server may be pre-programmed to change the priority level associated with the buddy group Colleagues and the user's PDA and/or cell phone to High each time the user shuts down his or her PC, or signs off of the IM server using his or her PC. In this instance, the user would always receive text messages from his or her colleagues on his or her PDA and/or cell phone when he or she is away from his or her PC. As will be understood by those of ordinary skill in the art, countless methods could be used for triggering the modification of the priority levels associated with various buddy/buddy groups and the various user devices.

Returning now to FIG. 9, as a result of the priority levels being changed, in Step 907, all of the stored text messages of the conversation between the user and Buddy B, which were conducted using Device 1 (e.g., the user's PC), are transmitted and displayed on Device 2 (e.g., the user's PDA). This enables the user to pick up using Device 2 where he or she left off in the conversation using Device 1. Finally, in Step 908, the text messaging conversation with Buddy B will be continued on Device 2, and all subsequent text messages received from either Buddy A or Buddy C will be transmitted only to Device 1.

### Conclusion:

As will be appreciated by one skilled in the art, the embodiments of the present invention described above may be embodied as a system, method, mobile terminal device or other apparatus. Accordingly, the present invention may take the form of an entirely hardware embodiment, an entirely software embodiment, or an embodiment combining software and hardware aspects. Furthermore, the present invention may take the form of a computer program product on a computer-readable storage medium having computer-readable program instructions (e.g., computer software) embodied in the storage medium. More particularly, the present invention may take the form of web-implemented computer software. Any suitable computer-readable storage medium may be utilized including hard disks, CD-ROMs, optical storage devices, or magnetic storage devices.

The present invention is described above with reference to block diagrams and flowchart illustrations of methods, apparatuses (i.e., systems) and computer program products according to an embodiment of the invention. It will be understood that each block of the block diagrams and flowchart illustrations, and combinations of blocks in the block diagrams and flowchart illustrations, respectively, can be implemented by computer program instructions. These computer program instructions may be loaded onto a general purpose computer, special purpose computer, or other programmable data processing apparatus to produce a machine, such that the instructions which execute on the computer or other programmable data processing apparatus create a means for implementing the functions specified in the flowchart block or blocks, although other means for implementing the functions including various combinations of hardware, firmware and software as described herein may also be employed.

These computer program instructions may also be stored in a computer-readable memory that can direct a computer or other programmable data processing apparatus to function in a particular manner, such that the instructions stored in the computer-readable memory produce an article of manufacture including computer-readable instructions for implementing the function specified in the flowchart block or blocks. The computer program instructions may also be loaded onto a computer or other programmable data processing apparatus to cause a series of operational steps to be performed on the computer or other programmable apparatus to produce a computer-implemented process such that the instructions that execute on the computer or other programmable apparatus provide steps for implementing the functions specified in the flowchart block or blocks.

Accordingly, blocks of the block diagrams and flowchart illustrations support combinations of means for performing the specified functions, combinations of steps for performing the specified functions and program instruction means for performing the specified functions. It will also be understood that each block of the block diagrams and flowchart illustrations, and combinations of blocks in the block diagrams and flowchart illustrations, can be implemented by special purpose hardware-based computer systems that perform the specified functions or steps, or combinations of special purpose hardware and computer instructions.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A method of selectively transferring a text messaging conversation to a second device (310, 310'), which was previously conducted using a first device (310, 310'), said method comprising:
causing (902) the text messaging conversation to be conducted using the first device;
modifying (906) a relationship between a priority level associated with the first device and a priority level associated with the second device based at least in part on with whom the text messaging conversation is conducted; and
automatically causing the text messaging conversation to be continued using the second device if the priority level associated with the second device exceeds the priority level associated with the first device, wherein causing the text messaging conversation to be continued comprises causing one or more text messages of the text messaging conversation conducted using the first device to be displayed on the second device.

2. The method of Claim 1 further comprising:
defining (901) one or more buddies or buddy groups with whom a text messaging conversation is capable of being conducted;
associating a first priority level with the first device corresponding to each buddy or buddy group; and
associating a second priority level with the second device corresponding to each buddy or buddy group, such that each buddy or buddy group has corresponding first and second priority levels associated with the first and second devices, respectively, wherein modifying the relationship between the priority level associated with the first device and the priority level associated with the second device comprises modifying a second priority level corresponding to at least one of the buddies or buddy groups.

3. A computer program to be run by a processor to perform a method as claimed in claim 1 or claim 2.

4. A network entity capable of selectively transferring a text messaging conversation from a first device (310, 310') to a second device (310, 310'), said network entity comprising means for storing one or more text messages of the text messaging conversation conducted using the first device,
**characterized in that** the network entity further comprises:
means for transmitting the stored text messages to the second device upon a determination that a priority level associated with the second device exceeds a priority level associated with the first device, wherein the priority level associated with the second device exceeds the priority level of the first device based at least in part on with whom the text messaging conversation is conducted.

5. A system for selectively transferring a text messaging conversation on a second device, which was previously conducted using a first device, said system comprising:
a first device (310, 310');
a network entity (120) in communication with the first device that stores one or more text messages of the text messaging conversation conducted using the first device; and
a second device (310, 310') in communication with the network entity,
**characterized in that** the first device is capable of causing a priority level associated with the second device to exceed a priority level associated with the first device based at least in part on with whom the text messaging conversation is being conducted, and wherein the second device is adapted to receive and display the one or more stored text messages when the priority level associated with the second device exceeds the priority level associated with the first device.

## Patentansprüche

1. Verfahren zum selektiven Transferieren einer Textnachrichtenkonversation zu einer zweiten Einrichtung (310, 310'), die zuvor unter Verwendung einer ersten Einrichtung (310, 310') abgehalten wurde, wobei das Verfahren Folgendes umfasst:
Bewirken (902), dass die Textnachrichtenkonversation unter Verwendung der ersten Einrichtung durchgeführt wird;
Modifizieren (906) einer Beziehung zwischen einem mit der ersten Einrichtung assoziierten Prioritätsniveau und einem mit der zweiten Einrichtung assoziierten Prioritätsniveau mindestens teilweise abhängig davon, mit wem die Textnachrichtenkonversation durchgeführt wird; und
automatisches Verursachen, dass die Textnachrichtenkonversation unter Verwendung der zweiten Einrichtung fortgesetzt wird, wenn das mit der zweiten Einrichtung assoziierte Prioritätsniveau das mit der ersten Einrichtung assoziierte Prioritätsniveau übersteigt, wobei das Bewirken, dass die Textnachrichtenkonversation fortgesetzt wird, umfasst zu bewirken, dass eine oder mehrere Textnachrichten der unter Verwendung der ersten Einrichtung abgehaltenen Textnachrichtenkonversation auf der zweiten Einrichtung angezeigt werden.

2. Verfahren nach Anspruch 1, ferner umfassend:
Definieren (901) eines oder mehrerer Buddies oder Buddy-Gruppen, mit denen eine Textnachrichtenkonversation abgehalten werden kann;
Assoziieren eines ersten Prioritätsniveaus mit der ersten Einrichtung entsprechend jedem Buddy oder jeder Buddy-Gruppe; und
Assoziieren eines zweiten Prioritätsniveaus mit der zweiten Einrichtung entsprechend jedem Buddy oder jeder Buddy-Gruppe dergestalt, dass jeder Buddy oder jede Buddy-Gruppe entsprechend ein erstes und zweites mit der ersten bzw. zweiten Einrichtung assoziiertes Prioritätsniveau aufweist, wobei das Modifizieren der Beziehung zwischen dem mit der ersten Einrichtung assoziierten Prioritätsniveau und dem mit der zweiten Einrichtung assoziierten Prioritätsniveau das Modifizieren eines zweiten Prioritätsniveaus umfasst, das mindestens einem der Buddies oder Buddy-Gruppen entspricht.

3. Computerprogramm zur Ausführung durch einen Prozessor, um ein Verfahren nach Anspruch 1 oder 2 auszuführen.

4. Netzentität, die in der Lage ist, selektiv eine Textnachrichtenkonversation von einer ersten Einrichtung (310, 310') zu einer zweiten Einrichtung (310, 310') zu transferieren, wobei die Netzentität Mittel zum Speichern einer oder mehrerer Textnachrichten der unter Verwendung der ersten Einrichtung abgehaltenen Textnachrichtenkonversation umfasst,
**dadurch gekennzeichnet, dass** die Netzentität ferner Folgendes umfasst:
Mittel zum Senden der gespeicherten Textnachrichten zu der zweiten Einrichtung, wenn bestimmt wird, dass ein mit der zweiten Einrichtung assoziiertes Prioritätsniveau ein mit der ersten Einrichtung assoziiertes Prioritätsniveau übersteigt, wobei das mit der zweiten Einrichtung assoziierte Prioritätsniveau das Prioritätsniveau der ersten Einrichtung mindestens teilweise abhängig davon übersteigt, mit wem die Textnachrichtenkonversation abgehalten wird.

5. System zum selektiven Transferieren einer Textnachrichtenkonversation auf eine zweite Einrichtung, die zuvor unter Verwendung einer ersten Einrichtung abgehalten wurde, wobei das System Folgendes umfasst:
eine erste Einrichtung (310, 310');
eine Netzentität (120) in Kommunikation mit der ersten Einrichtung, die eine oder mehrere Textnachrichten der unter Verwendung der ersten Einrichtung abgehaltenen Textnachrichtenkonversation speichert; und
eine zweite Einrichtung (310, 310') in Kommunikation mit der Netzentität,
**dadurch gekennzeichnet, dass** die erste Einrichtung in der Lage ist, mindestens teilweise abhängig davon, mit wem die Textnachrichtenkonversation abgehalten wird, zu bewirken, dass ein mit der zweiten Einrichtung assoziiertes Prioritätsniveau ein mit der ersten Einrichtung assoziiertes Prioritätsniveau übersteigt, und wobei die zweite Einrichtung dafür ausgelegt ist, die eine oder mehrere gespeicherten Textnachrichten zu empfangen und anzuzeigen, wenn das mit der zweiten Einrichtung assoziierte Prioritätsniveau das mit der ersten Einrichtung assoziierte Prioritätsniveau übersteigt.

## Revendications

1. Un procédé de transfert sélectif d'une conversation de messagerie textuelle vers un deuxième dispositif (310, 310'), qui était conduite antérieurement au moyen d'un premier dispositif (310, 310'), ledit procédé comprenant :
l'entraînement (902) de la conversation de messagerie textuelle à être conduite au moyen du premier dispositif,
la modification (906) d'une relation entre un niveau de priorité associé au premier dispositif et un niveau de priorité associé au deuxième dispositif en fonction au moins en partie de la personne avec laquelle la conversation de messagerie textuelle est conduite, et
l'entraînement automatique de la conversation de messagerie textuelle à être poursuivie au moyen du deuxième dispositif si le niveau de priorité associé au deuxième dispositif dépasse le niveau de priorité associé au premier dispositif, l'entraînement de la conversation de messagerie textuelle à être poursuivie comprenant l'entraînement d'un ou plusieurs messages textuels de la conversation de messagerie textuelle conduite au moyen du premier dispositif à être affichés sur le deuxième dispositif.

2. Le procédé selon la revendication 1 comprenant en outre :
la définition (901) d'un ou plusieurs amis ou groupes d'amis avec lesquels une conversation de messagerie textuelle peut être conduite,
l'association d'un premier niveau de priorité au premier dispositif correspondant à chaque ami ou groupe d'amis, et
l'association d'un deuxième niveau de priorité au deuxième dispositif correspondant à chaque ami ou groupe d'amis, de sorte que chaque ami ou groupe d'amis possède un premier et un deuxième niveaux de priorité correspondants associés aux premier et deuxième dispositifs, respectivement, la modification de la relation entre le niveau de priorité associé au premier dispositif et le niveau de priorité associé au deuxième dispositif comprenant la modification d'un deuxième niveau de priorité correspondant à au moins un des amis ou groupes d'amis.

3. Un programme informatique exécutable par un processeur destiné à exécuter un procédé selon la revendication 1 ou 2.

4. Une entité de réseau capable de transférer de manière sélective une conversation de messagerie textuelle d'un premier dispositif (310, 310') vers un deuxième dispositif (310, 310'), ladite entité de réseau comprenant un moyen de conservation en mémoire d'un ou plusieurs messages textuels de la conversation de messagerie textuelle conduite au moyen du premier dispositif,
**caractérisée en ce que** ladite entité de réseau comprend en outré :
un moyen de transmission des messages textuels conservés en mémoire au deuxième dispositif après détermination qu'un niveau de priorité associé au deuxième dispositif dépasse un niveau de priorité associé au premier dispositif, dans lequel le niveau de priorité associé au deuxième dispositif dépassant le niveau de priorité du premier dispositif en fonction au moins en partie de la personne avec laquelle la conversation de messagerie textuelle est conduite,

5. Un système de transfert sélectif d'une conversation de messagerie textuelle vers un deuxième dispositif, qui était conduite antérieurement au moyen d'un premier dispositif, ledit système comprenant :
un premier dispositif (310, 310'),
une entité de réseau (120) en communication avec le premier dispositif qui conserve en mémoire un ou plusieurs messages textuels de la conversation de messagerie textuelle conduite au moyen du premier dispositif, et
un deuxième dispositif (310, 310') en communication avec l'entité de réseau,
**caractérisé en ce que** le premier dispositif est capable d'entraîner un niveau de priorité associé au deuxième dispositif à dépasser un niveau de priorité associé au premier dispositif en fonction au moins en partie de la personne avec laquelle la conversation de messagerie textuelle est conduite, et
dans lequel le deuxième dispositif est adapté de façon à recevoir et à afficher les un ou plusieurs messages textuels conservés en mémoire lorsque le niveau de priorité associé au deuxième dispositif dépasse le niveau de priorité associé au premier dispositif.
